# EUROPÄISCHE PATENTANMELDUNG

(11) **EP 4 686 520 A1**
(43) Veröffentlichungstag der Anmeldung: **04.02.2026**
(21) Anmeldenummer: 24191866.3
(22) Anmeldetag: 30.07.2024
(51) Int. Cl.: B23D 45/10, B23D 61/02, B23D 61/04, B27B 9/02, B27G 19/10

(54) **VORRITZWERKZEUG UND SYSTEM UMFASSEND EIN VORRITZWERKZEUG UND SÄGEWERKZEUG**

(71) Anmelder: Festool GmbH, 73240 Wendlingen am Neckar (DE)
(72) Erfinder: HAIBLE, Marco, 73240 Wendlingen (DE); RANDECKER, Andreas, 73240 Wendlingen (DE); SOBL, Phillip, 73240 Wendlingen (DE)
(74) Vertreter: Patentanwälte Bregenzer und Reule Partnerschaftsgesellschaft mbB

(57) **Zusammenfassung**

Die Erfindung betrifft ein Vorritzwerkzeug (60) für eine Sägemaschine, wobei das Vorritzwerkzeug (60) zum drehbaren Antreiben um eine Drehachse (DV) ausgestaltet ist und einen scheibenförmigen Blattkörper (62) mit voneinander abgewandten Flachseiten (63) aufweist, der in seinem von der Drehachse (DV) durchsetzten Zentrum (65) eine Maschinenaufnahme (64) zur lösbaren Befestigung an einer Vorritzer-Werkzeugaufnahme (24) der Sägemaschine und an seinem radialen Außenumfang (A62) bezüglich der Drehachse (DV) eine Ritzzahn-Anordnung (70) zum Einbringen einer Ritze (RI) in eine erste Werkstückoberfläche (WO) eines Werkstücks (W) aufweist, wobei die Ritzzahn-Anordnung (70) mindestens einen Ritzzahn (71) mit einer rechtwinkelig quer zu den Flachseiten (63) verlaufenden Hauptschneidkante (72), die zwischen Nebenschneidkanten (73) verläuft, wobei ein sich um die Maschinenaufnahme (64) radial außen erstreckender Außendurchmesser (66) des Vorritzwerkzeugs (60) maximal 80 mm beträgt, und wobei bezüglich der Drehachse (DV) radial äußere Endbereiche der Nebenschneidkanten (73) einen ersten Querabstand (74) parallel zu der Drehachse (DV) und bezüglich der Drehachse (DV) radial innere, zum Einschneiden der Ritze (RI) in das Werkstück (W) vorgesehene Endbereiche der Nebenschneidkanten (73) einen zweiten Querabstand (75) parallel zu der Drehachse (DV) aufweisen, wobei der erste Querabstand (74) bestimmend für eine Breite der Ritze an deren Ritzen-Boden (RB) und der zweite Querabstand (75) bestimmend für eine maximale Breite der Ritze (RI) sind und der zweite Querabstand (75) mindestens so groß wie der erste Querabstand (74) ist. Der erste Querabstand (74) maximal beträgt das 0,75 fache des zweiten Querabstands (75) und/oder ist kleiner als ein zu der Drehachse (DV) paralleler Abstand der Flachseiten (63) des Blattkörpers (62) im Bereich des mindestens einen Ritzzahns (71) voneinander.

## Beschreibung

Die Erfindung betrifft ein Vorritzwerkzeug für eine Sägemaschine, insbesondere für eine Sägemaschine in Gestalt einer Hand-Sägemaschine oder einer halbstationären Sägemaschine, oder als Bestandteil dieser Sägemaschine, wobei das Vorritzwerkzeug zum drehbaren Antreiben um eine Drehachse ausgestaltet ist und einen scheibenförmigen Blattkörper mit voneinander abgewandten Flachseiten aufweist, der in seinem von der Drehachse durchsetzten Zentrum eine Maschinenaufnahme zur lösbaren Befestigung an einer Vorritzer-Werkzeugaufnahme der Sägemaschine und an seinem radialen Außenumfang bezüglich der Drehachse eine Ritzzahn-Anordnung zum Einbringen einer Ritze in eine erste Werkstückoberfläche eines Werkstücks aufweist, wobei die Ritzzahn-Anordnung mindestens einen Ritzzahn mit einer insbesondere rechtwinkelig quer zu den Flachseiten verlaufenden Hauptschneidkante zur Herstellung eines Ritzen-Bodens der Ritze, die zwischen Nebenschneidkanten zur Herstellung von Ritzen-Seitenflanken der Ritze verläuft, wobei das Vorritzwerkzeug insbesondere zur Herstellung einer solchen Ritze ausgestaltet ist, dass die Sägemaschine anhand eines insbesondere als Sägeblatt ausgestalteten Sägewerkzeugs einen mit der Ritze fluchtenden Sägeschnitt von einer zu der ersten Werkstückoberfläche entgegengesetzten zweiten Werkstückoberfläche des Werkstücks her mit einer gegenüber einer Ritzen-Breite der Ritze geringeren Sägeschnitt-Breite des Sägeschnitt in das Werkstück einbringen kann, so dass das Werkstück an den Ritzen-Seitenflanken nicht ausreißt, wobei ein sich um die Maschinenaufnahme radial außen erstreckender Außendurchmesser des Vorritzwerkzeugs maximal 80 mm beträgt,
und wobei bezüglich der Drehachse radial äußere Endbereiche der Nebenschneidkanten einen ersten Querabstand parallel zu der Drehachse und bezüglich der Drehachse radial innere, zum Einschneiden der Ritze in das Werkstück vorgesehene Endbereiche der Nebenschneidkanten einen zweiten Querabstand parallel zu der Drehachse aufweisen, wobei der erste Querabstand bestimmend für eine Breite der Ritze am Ritzen-Boden und der zweite Querabstand bestimmend für eine maximale Breite der Ritze an der ersten Werkstückoberfläche des Werkstücks sind und der zweite Querabstand mindestens so groß wie der erste Querabstand ist.

Ferner sieht die Erfindung ein System mit einem Sägeblatt und einem Vorritzwerkzeug sowie eine Sägemaschine mit einem Vorritzwerkzeug vor.

Ein derartiges Vorritzwerkzeug ist beispielsweise im Zusammenhang mit einer Ritzvorrichtung gemäß WO 2021/116480 A1 beschrieben. Das Vorritzwerkzeug hat Schneidezähne mit einer Hauptschneidkante, welche zwischen Nebenschneidkanten angeordnet ist, wobei die Nebenschneidkanten schräg verlaufen, z.B. konisch verjüngende Zähne ausbilden. Aufgrund der schräg verlaufenden Nebenschneidkanten ist es möglich, Ritzen mit unterschiedlichen Querbreiten herzustellen, so dass unterschiedliche Sägeblätter, die man auch als Hauptsägeblatt bezeichnen kann, bei der Hand-Sägemaschine einsetzbar sind. Das Ziel ist jedoch, dass die Ritze eine nur wenig größere Querbreite aufweist als die spätere Sägeschnitt-Breite, die mit dem Sägewerkzeug hergestellt wird.

Der Anwendungsbereich eines derartigen Vorritzwerkzeugs ist jedoch eingeschränkt. Insbesondere dient eben das bekannte System dazu, möglichst exakte und schmale Sägeschnitte herzustellen. Bei anderen Anwendungen, beispielsweise der Herstellung von Dämmstoffplatten im Außenbereich oder dergleichen, kommt es jedoch auf derartig exakte Sägeschnitte nicht an.

Es ist daher die Aufgabe der vorliegenden Erfindung, ein verbessertes oder alternatives Vorritzwerkzeug bereit zu stellen.

Zur Lösung der Aufgabe ist bei einem Vorritzwerkzeug der eingangs genannten Art vorgesehen, dass der erste Querabstand maximal das 0,75 fache des zweiten Querabstands beträgt und/oder kleiner als ein zu der Drehachse paralleler Abstand der Flachseiten des Blattkörpers im Bereich des mindestens einen Ritzzahns voneinander ist.

Anhand des Vorritzwerkzeugs ist es in Verbindung mit dem Sägewerkzeug, die beide an der Sägemaschine angeordnet sind, gleichzeitig eine Anschrägung des Werkstücks, nämlich eine Fase oder einen Falz, und einen Sägeschnitt zur beispielsweise Ablängung des Werkstücks herzustellen.

Es ist dabei ein vorteilhafter Grundgedanke, dass der Ritzenboden, der durch das Vorritzwerkzeug hergestellt ist, eine gewisse Mindestbreite aufweist. Mithin dient also das Vorritzwerkzeug dazu, nicht nur beispielsweise schräge Ritzen-Seitenflanken herzustellen, sondern auch einen dedizierten Ritzen-Boden. Dadurch kann die Ritze weniger tief ausgestaltet sein, obwohl dennoch ausreichende Ritzen-Seitenflanken vorhanden sind, die später eine Fase ausbilden oder ausbilden können, die sich neben den durch das Sägewerkzeug hergestellten Sägeschnitt erstrecken. Somit kann beispielsweise eine Dämmstoffplatte mit einer schrägen Fase oder gestuften Fase, die man auch als Falz bezeichnen kann, hergestellt werden. Das Sägewerkzeug schneidet das den Ritzen-Boden bildende Material des Werkstücks weg. Somit kann also Beispielsweise die Leistung des das Vorritzwerkzeug antreibenden Vorritzaggregats geringer ausfallen, während das das Sägewerkzeug antreibende Sägeaggregat eine entsprechend höhere Leistung aufbringt oder aufweist.

Es ist aber auch vorteilhaft möglich, dass das Vorritzwerkzeug singulär benutzt wird, d.h. dass eine von dem Vorritzwerkzeug hergestellten Ritze nicht durch einen nachfolgenden Sägeschnitt anhand eines Sägewerkzeugs durchtrennt wird, sondern dass eine Ritze mit Boden und mindestens einer sich daneben erstreckender Fase hergestellt wird.

Der erste Querabstand beträgt vorzugsweise maximal das 0,6-fache, insbesondere maximal das 0,5-fache, noch weiter bevorzugt maximal das 0,4-fache oder noch weiter bevorzugt das 0,3-fache des zweiten Querabstandes. Mithin ist also der Querabstand der Nebenschneidkanten an ihrem von der Hauptschneidkante entfernten Endbereich deutlich größer als der Querabstand bzw. die Länge der Hauptschneidkante.

Die Hauptschneidkante oder der erste Querabstand ist vorzugsweise relativ schmal. Beispielsweise beträgt der Querabstand maximal 75%, noch weiter bevorzugt maximal 60%, noch weiter bevorzugt maximal 50% des Abstands der Flachseiten des Blattkörpers voneinander. Der Abstand der Flachseiten des Blattkörpers entspricht sozusagen der Dicke des Blattkörpers.

An dieser Stelle sei erwähnt, dass die Flachseiten des Blattkörpers des Vorritzwerkzeugs in einem Abstand zu dem mindestens einen Ritzzahn, beispielsweise im Bereich der Maschinenaufnahme, durchaus größer sein kann. Dieser Abstand des Blattkörpers oder die Dicke des Blattkörpers ist im Bereich der Maschinenaufnahme nicht relevant für die Breite der Ritze, die mit dem Vorritzwerkzeug herstellbar ist. Das Vorritzwerkzeug taucht nur mit seinen Ritzzähnen oder mit einem Bereich nahe bei den Ritzzähnen in das Werkstück ein, um dort die Ritze anzubringen.

Vorteilhaft ist zur Lösung der Aufgabe ein System mit einem Sägeblatt und dem Vorritzwerkzeug vorgesehen. Das Sägeblatt hat einen scheibenförmigen Sägeblattkörper mit voneinander abgewandten Flachseiten, der in seinem von der Drehachse durchsetzten Zentrum eine Maschinenaufnahme zur lösbaren Befestigung an einer Sägen-Werkzeugaufnahme der Sägemaschine aufweist. Am radialen Außenumfang des Sägeblattkörpers bezüglich der Drehachse ist eine Sägezahnanordnung mit in Umfangsrichtung hintereinander angeordneten Sägezähnen angeordnet, wobei Schneidkanten der Sägezähne eine eine Querbreite des Sägeschnitts bestimmende maximale Schnittbreite parallel zur Drehachse des Sägewerkzeugs aufweisen, die mindestens 30 % kleiner als der die maximale Breite der Ritze bestimmende zweite Querabstand des mindestens einen Ritzzahns des Vorritzwerkzeugs ist.

Die vorgenannte Maßnahme dient insbesondere dazu, dass die durch die Nebenschneidkanten des Vorritzwerkzeugs hergestellten Ritzen-Seitenflanken auch dann stehen bleiben, wenn der Sägeschnitt in das Werkstück eingebracht wird.

Bevorzugt ist es, wenn die maximale Quererstreckung der Sägezähne des Sägeblattes mindestens 40%, noch weiter bevorzugt mindestens 50% und noch weiter bevorzugt mindestens 60% kleiner als der zweite Querabstand des mindestens einen Ritzzahns des Vorritzwerkzeugs ist.

Ein Außendurchmesser des Vorritzwerkzeugs beträgt maximal 50 %, vorzugsweise maximal 40 %, insbesondere maximal 30 % des Außendurchmessers des Sägeblatts. Mithin ist also das Vorritzwerkzeug deutlich kleiner als das Sägeblatt.

Die Maschinenaufnahme des Vorritzwerkzeugs ist ebenfalls vorteilhaft kleiner als die Maschinenaufnahme des Sägeblatts. Beispielsweise ist der Innendurchmesser der Maschinenaufnahme des Vorritzwerkzeugs halb so groß wie der Innendurchmesser der Maschinenaufnahme des Sägeblatts.

Ein Verhältnis zwischen dem Außendurchmesser des Sägeblatts und der Maschinenaufnahme des Sägeblatts weicht von einem Verhältnis zwischen dem Außendurchmesser des Vorritzwerkzeugs und der Maschinenaufnahme des Vorritzwerkzeugs maximal 30 %, insbesondere maximal 20 %, ab.

Zu den Maßen von Sägeblatt und Vorritzwerkzeug sind einige vorteilhafte Ausgestaltungen zu nennen, nämlich beispielsweise das das Sägeblatt einen Durchmesser von 150-180 mm aufweist.

Beim Vorritzwerkzeug ist ein Außendurchmesser von maximal 80 mm, insbesondere maximal 75 mm, weiter bevorzugt maximal 60 mm oder noch weiter bevorzugt maximal 50 mm vorteilhaft.

Die Maschinenaufnahme des Sägewerkzeugs hat beispielsweise einen Durchmesser von ca. 15-30 mm, vorzugsweise etwa 18-22 mm, insbesondere etwa 20 mm. Die Maschinenaufnahme des Vorritzwerkzeugs hat vorzugsweise einen Durchmesser von ca. 6-8 mm, insbesondere ca. 6,5 mm oder ¼ Zoll.

Bevorzugt ist es jedenfalls, wenn das Verhältnis von Außendurchmesser zum Durchmesser der Maschinenaufnahme sowohl beim Vorritzwerkzeug als auch beim Sägeblatt bei etwa 7-9, vorzugsweise etwa bei 7,4-8,5 liegt. Möglich und vorteilhaft ist in der Praxis beim Sägewerkzeug oder Sägeblatt aber auch ein Verhältnis von Außendurchmesser zum Durchmesser der Maschinenaufnahme in einem Bereich von ca. 7,5-10. Beim Vorritzwerkzeug kann das Verhältnis zwischen seinem Außendurchmesser zum Durchmesser seiner Maschinenaufnahme in einem Bereich von ca. 5-13 liegen.

Vorteilhaft ist es, wenn der Blattkörper des Vorritzwerkzeugs eine größere Dicke als der Blattkörper des Sägeblatts aufweist. Die Dicke der Blattkörper ist durch den Abstand zwischen den jeweiligen Flachseiten der Blattkörper bestimmt.

Gegenüber einem Werkzeug, welches beispielsweise zum Einschneiden von Nuten in ein Werkstück vorgesehen ist, die später nicht durch ein Sägewerkzeug sozusagen durchschnitten werden, also keine verhältnismäßig schmale und zur Verhinderung des Ausreißens bei einem späteren Sägeschnitt vorgesehene Ritzen sind, hat das Vorritzwerkzeug vorzugsweise einen deutlich kleineren Durchmesser. Der Außendurchmesser eines solchen Werkzeugs zur Herstellung einer sozusagen richtigen Nut beträgt in der Regel 100 mm oder mehr.

Die zum Betrieb mit einem erfindungsgemäßen Vorritzwerkzeug vorgesehene und/oder ausgestaltete Sägemaschine ist vorzugsweise eine manuell entlang des Werkstücks zu führende Hand-Sägemaschine. Die Hand-Sägemaschine kann frei über das Werkstück geführt werden und/oder ohne eine Führungsschiene betrieben werden. Bevorzugt ist jedoch ein Betrieb mit einer Führungsschiene.

Vorteilhaft ist die Hand-Werkzeugmaschine eine Tauchsäge und/oder weist keine Schutzabdeckung für einen vor die Führungsfläche frei vorstehenden Abschnitt des Sägewerkzeugs und/oder des Vorritzwerkzeugs auf.

Die Hand-Sägemaschine weist vorteilhaft ein Sägeaggregat, welches eine Sägen-Werkzeugaufnahme für das Sägewerkzeug, insbesondere ein Sägeblatt, und einen Sägen-Antriebsmotor zum Antreiben der Sägen-Werkzeugaufnahme aufweist, und eine Führungseinrichtung auf, die eine sich entlang einer Längsachse erstreckende Führungsfläche zum Führen der Hand-Sägemaschine entlang einer Arbeitsrichtung an einem Werkstück oder einer Führungsschiene aufweist und an dessen zu der Führungsfläche entgegengesetzten Oberseite die Sägen-Werkzeugaufnahme, insbesondere das Sägeaggregat als Ganzes, anhand eines Sägen-Tiefeneinstelllagers zwischen einer oberen Tiefeneinstellposition und mindestens einer unteren Tiefeneinstellposition beweglich gelagert ist, in der die Sägen-Werkzeugaufnahme näher zu der Führungsfläche hin verstellt ist als in der oberen Tiefeneinstellposition, sodass das Sägewerkzeug zum Einbringen eines Sägeschnittes in das Werkstück in der unteren Tiefeneinstellposition weiter vor die Führungsfläche vorsteht als in der oberen Tiefeneinstellposition.

Die Hand-Sägemaschine weist vorteilhaft ein bezüglich der Arbeitsrichtung vor dem Sägeaggregat an der Führungseinrichtung angeordnetes Vorritzaggregat mit einer Vorritzer-Werkzeugaufnahme für das Vorritzwerkzeug, insbesondere ein Vorritzer-Sägeblatt, und mit einem Vorritzer-Antrieb zum Antreiben der Vorritzer-Werkzeugaufnahme auf.

Die Vorritzer-Werkzeugaufnahme ist vorteilhaft an oder bezüglich der Führungseinrichtung anhand eines insbesondere von dem Sägen-Tiefeneinstelllager separaten Vorritzer-Tiefeneinstelllagers zwischen mindestens einer Aktivposition, in der das an der Vorritzer-Werkzeugaufnahme angeordnete Vorritzwerkzeug zum Einbringen einer einem einzubringenden Sägeschnitt in Arbeitsrichtung vorgelagerten Ritze in das Werkstück vor die Führungsfläche vorsteht, und einer Inaktivposition beweglich gelagert, in der das Vorritzwerkzeug hinter die Führungsfläche zurückverstellt ist.

Das Sägeaggregat und das Vorritzaggregat sind an einer zu der Führungsfläche entgegengesetzten Oberseite der Führungseinrichtung angeordnet. Die Führungseinrichtung umfasst beispielsweise einen sogenannten Sägetisch. Die Führungseinrichtung oder der Führungskörper umfasst vorzugsweise einen Plattenkörper, an dessen einer Seite die Führungsfläche und an dessen zu der Führungsfläche entgegengesetzten Seite oder Oberseite das Sägeaggregat und das Vorritzaggregat angeordnet sind. An der Führungsfläche sind vorzugsweise Führungsaufnahmen, beispielsweise Längsnuten oder dergleichen, für Führungsrippen oder Führungsvorsprünge einer Führungsschiene angeordnet.

Mit dem Vorritzwerkzeug kann somit eine Ritze in die Oberfläche des Werkstücks, insbesondere dessen Oberseite, eingebracht werden. Die Ritze fluchtet mit dem später in das Werkstück einzubringenden Sägeschnitt. Das Sägewerkzeug schneidet vorzugsweise in das Werkstück von dessen Unterseite her ein. Das Sägewerkzeug taucht im Bereich der Ritze aus dem Werkstück aus, wobei durch die Ritze die Gefahr vermieden oder zumindest verringert wird, dass das Werkstück an seiner Oberseite durch das Sägewerkzeug ausgerissen wird.

Weitere vorteilhafte Maßnahmen in Bezug auf das Vorritzwerkzeug werden nachfolgend erläutert:
Die mindestens eine Hauptschneidkante und die Nebenschneidkanten sind an ihrem jeweiligen Schnittbereich zueinander vorteilhaft winkelig. Mithin ist es vorteilhaft, wenn die Hauptschneidkante und die Nebenschneidkanten einen Schnittbereich aufweisen, bei dem sie einen Winkel einschließen und in dem sich die mindestens eine Hauptschneidkante und die jeweilige Nebenschneidkante winkelig schneiden. Es versteht sich, dass zwischen einer Hauptschneidkante und einer Nebenschneidkante auch ein ausgerundeter Schnittbereich vorgesehen sein kann, insbesondere dann, wenn eine der Schneidkanten eine Krümmung oder Wölbung aufweist.

Bevorzugt ist beispielsweise, dass eine Gerade, die durch einen Schnittpunkt zwischen der Hauptschneidkante und mindestens einer der Nebenschneidkanten sowie durch einen von der Hauptschneidkante am weitesten entfernten Punkt der mindestens einen Nebenschneidkante und/oder einen Übergangspunkt zwischen der Nebenschneidkante und einem nicht schneidenden und/oder zur Flachseite des Blattkörpers parallelen oder zum Zentrum der Maschinenaufnahme geneigten Abschnitt des mindestens einen Ritzzahns verläuft, einen Winkel von maximal 60°, vorzugsweise maximal 50° zu der Hauptschneidkante aufweist. Weiter bevorzugt ist es, wenn dieser vorgenannte Winkel maximal 45° und noch weiter bevorzugt maximal 40° oder 35° beträgt. Die Gerade kann beispielsweise entlang der Nebenschneidkante verlaufen, d.h. die Nebenschneidkante hat beispielsweise einen geraden Verlauf. Selbstverständlich ist es vorteilhaft, wenn eine solche Gerade in Bezug auf beide Nebenschneidkanten vorgesehen ist, zwischen denen die Hauptschneidkante verläuft. Beispielsweise sind die Nebenschneidkanten etwa V-förmig zueinander angeordnet, wobei sie nicht spitz aufeinander zulaufen, sondern an ihren am nächsten zueinander befindlichen Orten durch die Hauptschneidkante miteinander verbunden sind.

Die Gerade verläuft also vom Schnittpunkt zwischen Hauptschneidkante und einer der Nebenschneidkanten weg in Richtung des Zentrums, wobei die Neigung dieser Gerade eine möglichst flache Neigung ist. Der Verlauf der Gerade wird also durch den Schnittpunkt zwischen Hauptschneidkante und Nebenschneidkante und beispielsweise einem Übergangspunkt definiert, der zwischen der Nebenschneidkante und einem nicht schneidenden Abschnitt des mindestens einen Ritzzahns verläuft. Dieser nicht schneidende Abschnitt kann beispielsweise parallel zur Flachseite des Blattkörpers verlaufen. Allerdings ist es auch möglich, dass dieser Abschnitt, der parallel zur Flachseite des Blattkörpers verläuft, eine Schneidfunktion hat. Somit kann also beispielsweise die Nebenschneidkante vom Schnittpunkt zwischen Hauptschneidkante und Nebenschneidkante verlaufen, bei dem die Nebenschneidkante nicht sozusagen aufhört, sondern noch weitere schneidende Abschnitte aufweisen, die jedoch eine andere Neigung bezüglich der Hauptschneidkante aufweisen können, beispielsweise rechtwinkelig zu dieser sein können, wobei dann die Nebenschneidkante in diesem Abschnitt parallel zur Flachseite des Blattkörpers verläuft, oder auch sogar zu dem Zentrum der Maschinenaufnahme hin geneigt sein. In der Praxis würde aber gerade die letzte Variante nicht für einen Schnitt in das Werkstück vorgesehen sein.

Die Gerade kann aber auch beispielsweise eine Art Umhüllende sein oder eine Gerade sein, hinter der die Nebenschneidkante zurückversetzt angeordnet ist. Beispielsweise kann dies bei der nachfolgend erläuterten konkaven Ausbildung der Nebenschneidkante der Fall sein.

Es ist aber auch möglich, dass die Nebenschneidkante bogenförmig oder konvex verläuft, wobei dann die Nebenschneidkante in einem flachen Radius in die Hauptschneidkante übergeht und in einem ebenso flachen Radius in einen am weitesten entfernten Bereich des Ritzzahns ausläuft.

Weiterhin kann mindestens eine Nebenschneidkante einen stufenförmigen Verlauf aufweisen. Dabei ist es möglich, dass beispielsweise eine Stufe, zwei Stufen oder drei oder mehr Stufen vorgesehen sind. Eine vorteilhafte Maßnahme kann vorsehen, dass eine radial äußerste Stufe oder ein radial äußerste Vorsprung zur Herstellung des Ritzenbodens vorgesehen und ausgestaltet ist, während sich daran anschließende Stufen zur Herstellung einer stufigen oder stufenförmigen Fase vorgesehen und ausgestaltet sind.

Die stufenförmigen, konvexen oder konkaven Nebenschneidkanten ermöglichen es, dass beispielsweise eine entsprechend gegensinnige, also beispielsweise durch eine konvexe Nebenschneidkante hergestellte Fase einen konkaven Verlauf oder eine konkave Kontur aufweist oder eine durch eine konkave Nebenschneidkante hergestellte Fase oder Seitenwand der Ritze einen konvexen Verlauf aufweist.

Ein bevorzugtes Konzept sieht vor, dass die Nebenschneidkanten und/oder die mindestens eine Hauptschneidkante geradlinig verlaufen.

Die Nebenschneidkanten können oder mindestens eine Nebenschneidkante kann beispielsweise einen konvexen oder bogenförmigen oder konkaven Verlauf aufweisen. Mithin können die Nebenschneidkanten eine ballige Kontur ausbilden.

Es ist also grundsätzlich möglich, dass die Nebenschneidkanten geradlinig sind, die Hauptschneidkante bogenförmig oder gekrümmt ist oder dass die Nebenschneidkanten bogenförmig verlaufen, während die Hauptschneidkante geradlinig ist. Beispielsweise kann vorgesehen sein, dass die Nebenschneidkanten geradlinig sind und die Hauptschneidkante nach radial außen konvex verläuft, so dass ein muldenförmiger Ritzen-Boden herstellbar ist.

Die Nebenschneidkanten und die mindestens eine Hauptschneidkante bilden im Querschnitt vorzugsweise eine Trapezform. Dabei ist es vorteilhaft, wenn das Trapez gerade Seitenkanten oder Schneidkanten hat. Es ist aber auch möglich, dass als Trapezform eine solche Form verstanden wird, bei der die Nebenschneidkanten und/oder die Hauptschneidkante einen gekrümmten, insbesondere einen flach gekrümmten oder flach bogenförmigen Verlauf haben.

Vorteilhaft ist vorgesehen, dass bezüglich der Drehachse radial innere, zum Einschneiden der Ritze in das Werkstück vorgesehene Endbereiche der Nebenschneidkanten zum radialen Außenumfang des Vorritzwerkzeugs eine solche Radialdistanz aufweisen, dass mit dem Vorritzwerkzeug Ritzen unterschiedlicher Tiefe bis zu einer durch die Radialdistanz begrenzten Maximaltiefe herstellbar sind und die Sägemaschine anhand eines Sägewerkzeugs einen mit der Ritze fluchtenden Sägeschnitt von einer zu der ersten Werkstückoberfläche entgegengesetzten zweiten Werkstückoberfläche des Werkstücks her mit einer gegenüber einer Ritzen-Breite der Ritze geringeren Sägeschnitt-Breite des Sägeschnitts in das Werkstück einbringen kann, so dass das Werkstück an den Ritzen-Seitenflanken nicht ausreißt.

Bevorzugt ist ein Verstellbereich bezüglich der Maximaltiefe derart, dass die Radialdistanz, also die radiale Länge der Nebenschneidkanten zum radialen Außenumfang des Vorritzwerkzeugs, was die Maximaltiefe der Ritze bestimmt, mindestens 1,2 mm beträgt. Bevorzugt ist die Radialdistanz oder Maximaltiefe noch grö-βer, nämlich beispielsweise 1,5 mm, 2 mm oder weiter bevorzugt mindestens 2,3 mm, 2,4 mm oder 2,5 mm. Somit können Ritzen bis zu maximal 2,5 mm hergestellt werden. Vorteilhaft ist auch, wenn die Radialdistanz beispielsweise 3 mm beträgt, sodass Ritzen bis zu dieser Tiefe mit dem Vorritzwerkzeug herstellbar sind.

Weiterhin ist es vorteilhaft, wenn die Nebenschneidkanten des Vorritzwerkzeugs länger als die mindestens eine Hauptschneidkante sind. Somit können beispielsweise relativ tiefe Ritzen hergestellt werde. Mithin ist also die Maximaltiefe der Ritze durch die relativ langen Nebenschneidkanten groß und/oder die Radialdistanz der Nebenschneidkanten von ihrem radial inneren Bereich bis zu ihrem radial äußeren Bereich größer als eine Länge der Hauptschneidkante in Bezug auf eine zu der Drehachse parallel Achse.

Beispielsweise weisen radial äußere Endbereiche der Nebenschneidkanten des Vorritzwerkzeugs, also diejenigen Bereiche der Nebenschneidkanten, die neben der Hauptschneidkante angeordnet sind oder in diese übergehen, einen ersten Querabstand parallel zu der Drehachse auf und bezüglich der Drehachse radial innere, zum Einschneiden der Ritze in das Werkstück vorgesehene Endbereiche der Nebenschneidkanten einen zweiten Querabstand parallel zu der Drehachse auf. Bis zu diesen Endbereichen der Nebenschneidkante ist es möglich, Ritzen herzustellen. Der erste Querabstand ist bestimmend für eine Breite der Ritze am Ritzen-Boden, der zweite Querabstand bestimmend für eine maximale Breite der Ritze an der ersten Werkstückoberfläche des Werkstücks. Der zweite Querabstand ist mindestens so groß wie der erste Querabstand.

Eine Schnittbreite des Sägeblatts liegt vorzugsweise in einem Bereich von ca. 1,6-2 mm, bevorzugt bei etwa 1,8 mm.

Vorteilhaft ist es, wenn eine Schnittbreite des Vorritzwerkzeugs größer als eine Schnittbreite des Sägeblatts ist. Bevorzugt ist die Schnittbreite des Vorritzwerkzeugs mindestens 1 mm breiter, vorzugsweise mindestens 1,5 mm breiter, noch weiter bevorzugt mindestens 2 mm breiter oder 3 mm breiter als die Schnittbreite des Sägeblatts.

Beispielsweise weist das Vorritzwerkzeug oder Vorritzblatt eine Schnittbreite von 3 mm, weiter bevorzugt 4 mm, noch weiter bevorzugt 5 mm auf.

Die Schnittbreite des Vorritzblatts oder Vorritzwerkzeugs ergibt sich durch einen Schnitt, der einerseits durch die Hauptschneidkante, andererseits durch eine oder beide der Nebenschneidkanten gebildet ist.

Die Schnittbreite, die mit dem Sägewerkzeug erzielbar ist, wird beispielsweise durch einen Querabstand, den Nebenschneidkanten der Sägezähne zueinander haben, bestimmt.

Beispielsweise weist eine jeweilige Schneidkante eines Sägezahns eine Hauptschneidkante auf, die zwischen Nebenschneidkanten des Sägezahns angeordnet ist. Die Nebenschneidkanten weisen im Bereich der Hauptschneidkante einen ersten Querabstand auf, der kleiner ist als ein zweiter Querabstand der Nebenschneidkanten in einem Abstand zu der Hauptschneidkante. Der zweite Querabstand ist bestimmend für eine Schnittbreite des Sägeschnittes. Der zweite Querabstand des Sägezahns ist jedoch kleiner als der zweite Querabstand des mindestens einen Ritzzahns. Beispielsweise ist der zweite Querabstand des Sägezahns nur etwa 60% so groß wie der zweite Querabstand des Ritzzahns. Es ist aber auch möglich, dass der zweite Querabstand des Sägezahns nur maximal halb so groß ist oder nur 40% des zweiten Querabstands des Ritzzahns beträgt.

Es ist möglich, dass die Ritzzahn-Anordnung mindestens zwei Ritzzähne aufweist, die die gleichen Geometrien von Hauptschneidkante und Nebenschneidkante aufweisen. Es ist auch möglich, dass alle Ritzzähne der Ritzzahn-in Ordnung die gleichen Geometrien bezüglich der Hauptschneidkante und Nebenschneidkanten aufweisen.

Es ist vorteilhaft vorgesehen, dass mindestens ein Ritzzahn, vorzugsweise mehrere Ritzzähne oder alle Ritzzähne der Ritzzahn-Anordnung, jeweils zwei Nebenschneidkanten aufweisen, zwischen denen eine Hauptschneidkante verläuft. Mithin stellt also dann ein derartiger Ritzzahn nicht nur die Hauptschneidkante bereit oder weist diese auf, sondern auch zwei Nebenschneidkanten an einander entgegensetzten Seiten.

Es ist aber auch möglich, dass Ritzzähne vorgesehen sind, die nur an einer Flachseite des Blattkörpers eine Schneidfunktion erfüllen, an der anderen Flachseite nicht. So kann eine Ausgestaltung der Erfindung vorsehen, dass die Ritzzahn-Anordnung mindestens zwei in Umfangsrichtung des Blattkörpers hintereinander angeordnete Ritzzähne aufweist, deren Nebenschneidkanten vor einander entgegengesetzte Flachseiten des Blattkörpers vorstehen und die im Bereich der jeweils anderen Flachseite keine Nebenschneidkante oder keine vor die andere Flachseite vorstehende Nebenschneidkante aufweisen. Somit schneidet also der eine Ritzzahn an der einen Flachseite einen Abschnitt der Ritzen-Seitenflanke, der andere Ritzzahn an der entgegengesetzten Flachseite die zu der vorgenannten Ritzen-Seitenflanke gegenüberliegende Ritzen-Seitenflanke.

Vorteilhaft ist vorgesehen, dass die Ritzzahn-Anordnung maximal 6 Ritzzähne, insbesondere maximal 4 Ritzzähne oder maximal 3 Ritzzähne oder maximal 2 Ritzzähne aufweist.

Vorteilhaft ist vorgesehen, dass die Ritzzahn-Anordnung nur einen einzigen Ritzzahn oder mindestens zwei Ritzzähne aufweist, die zueinander einen Winkelabstand bezüglich der Drehachse von mindestens 20° aufweisen. Dabei liegt die Überlegung zugrunde, dass die Ritzzahnanordnung wenige Ritzzähne hat oder jedenfalls Ritzzähne, die einen relativ großen Winkelabstand oder Bogenabstand zueinander aufweisen. Es ist dabei ein Grundgedanke, dass wenige Ritzzähne ausreichen, um eine Ritze ausreichender Qualität herzustellen, wobei zugleich das Vorritzwerkzeug einen geringen Verschleiß aufweist.

Die Ritzzähne haben bevorzugt besonders große Winkelabstände. Beispielsweise ist der Winkelabstand zwischen Ritzzähnen, die am radialen Außenumfang des Blattkörpers hintereinander angeordnet sind, also in Umfangsrichtung des Blattkörpers oder Vorritzwerkzeugs hintereinander angeordnet sind, mindestens 30°. Bevorzugt sind noch größere Winkelabstände von beispielsweise 45°, 60° oder sogar 90°. Der Winkelabstand kann auch 180° oder 270° oder 360° betragen. Diese Winkelabstände können zwischen allen Ritzzähnen vorgesehen sein. Es ist aber auch möglich, dass das Vorritzwerkzeug Ritzzähne mit unterschiedlichen Winkelabständen relativ zueinander aufweist. Bevorzugt ist jedoch, wenn mindestens zwei, vorzugsweise alle Ritzzähne der Ritzzahn-Anordnung, denselben oder im Wesentlichen denselben Winkelabstand zueinander aufweisen.

Weiterhin zweckmäßig ist es, wenn die Ritzzahn-Anordnung maximal sechs Ritzzähne, vorzugsweise maximal fünf Ritzzähne aufweist. Noch weiter bevorzugt sind maximal vier Ritzzähne oder drei Ritzzähne. Auch eine Anordnung von nur zwei Ritzzähnen oder nur einem Ritzzahn am Außenumfang des Vorritzwerkzeugs ist möglich.

Gerade wenn nur wenige Ritzzähne oder sogar nur ein einzelner Ritzzahn vorhanden ist, können Unwuchten entstehen. Zur Vermeidung dieser Problematik kann die nachfolgende Maßnahme vorgesehen sein:
Vorzugsweise weist das Vorritzwerkzeug an dem Blattkörper mindestens eine Wuchtkontur, beispielsweise eine oder mehrere Wuchtaussparungen, auf.

Die Wuchtkontur und ein der Wuchtkontur zugeordneter Ritzzahn sind vorzugsweise an einander diametral entgegengesetzten Seiten am Außenumfang des Vorritzwerkzeugs angeordnet. Eine Wuchtkontur umfasst beispielsweise einen Wuchtvorsprung, der neben einer oder mehreren Wuchtaussparungen angeordnet ist. Beispielsweise ist in Drehrichtung des Vorritzwerkzeugs oder in einer zum Betrieb des Vorritzwerkzeugs vorgesehenen Drehrichtung eine Wuchtaussparung dem Wuchtvorsprung vorgelagert und/oder eine Wuchtaussparung nachgelagert. Die Wuchtkontur ist vorzugsweise am Blattkörper des Vorritzwerkzeugs ausgebildet, beispielsweise durch entsprechende Aussparungen und/oder Vorsprünge.

Ein bevorzugtes Konzept sieht vor, dass der mindestens eine Ritzzahn in etwa radial bezüglich einer Radiuslinie, die vom Zentrum des Vorritzwerkzeugs zu dessen Außenumfang verläuft, verläuft.

Der Ritzzahn kann aber auch in Bezug auf diese radiale Linie oder Radiuslinie nach vorn oder nach hinten in einer zum Betrieb des Vorritzwerkzeugs vorgesehenen Drehrichtung geneigt sein, beispielsweise in einem Winkel von maximal 5° zur Radiuslinie, insbesondere einem Winkel von maximal 3°, noch weiter bevorzugt in einem Winkel von maximal 1°. Die vorgenannten Maximalwerte gelten selbstverständlich für eine Neigung nach vorn abweichend von der Radiuslinie aber auch für eine Neigung nach hinten in Bezug auf die Radiuslinie, also beispielsweise ± 5°. Eine Neigung des mindestens einen Ritzzahns in Drehrichtung des Vorritzwerkzeugs nach vorn zu der Radiuslinie erhöht beispielsweise eine Schnittkraft. Eine Neigung des mindestens einen Ritzzahns in Drehrichtung nach hinten zu der Radiuslinie verbessert die Schnittqualität der Ritze.

Die Sägezähne des Sägewerkzeugs weisen vorzugsweise eine Neigung zu einer jeweiligen Radiallinie, die durch das Zentrum des Sägewerkzeugs verläuft auf. Insbesondere sind die Sägezähne in einer zum Betrieb des Sägewerkzeugs vorgesehenen Drehrichtung nach vorn geneigt. Eine Neigung eines jeweiligen Ritzzahns zu einer Radiallinie des Vorritzwerkzeugs ist vorzugsweise geringer als eine Neigung eines jeweiligen Sägezahns des Sägewerkzeugs bezüglich einer Radialen des Sägewerkzeugs, die durch das Zentrum des Sägewerkzeugs verläuft.

Beispielsweise ist ein jeweiliger Sägezahn bezüglich einer Radiallinie, die durch das Zentrum des Sägewerkzeugs verläuft, in einem Winkel von mindestens 2°, bevorzugt mindestens 3°, noch weiter bevorzugt mindestens 4° oder mindestens 5° nach vorn geneigt.

Vorzugsweise hat das Vorritzwerkzeug einen in Relation zum Sägewerkzeug, welches insbesondere ein Sägeblatt ist, einen wesentlich kleineren Außendurchmesser bezüglich seiner Drehachse.

Der Blattkörper des Vorritzwerkzeugs weist bezüglich der Drehachse vorteilhaft einen im Wesentlichen kreisrunden Außenumfang auf. Die mindestens eine Hauptschneidkante oder an die Hauptschneidkante aufweisender, am Blattkörper angeordneter Schneidkörper des mindestens einen Ritzzahns steht nach radial außen bezüglich der Drehachse vor den Außenumfang des Blattkörpers mit einem Radialabstand vor. Der Radialabstand beträgt beispielsweise 1,5 mm bis 2,5 mm, besonders bevorzugt 1 mm bis 1,5 mm. Der Radialabstand kann minimal beispielsweise 0,1 mm bis 0,5 mm sein. Der Radialabstand beträgt vorzugsweise maximal 2 mm bis 1 mm.

Die mindestens eine Nebenschneidkante des mindestens einen Ritzzahns, beispielsweise ein die Nebenschneidkante aufweisender Schneidkörper, steht vor die jeweilige Flachseite des Blattkörpers vorteilhaft vor, an der die Nebenschneidkante angeordnet ist.

Mithin ist durch beide vorgenannten Maßnahmen erreicht, dass der Blattkörper an sich nicht in Kontakt mit der hergestellten Ritze gelangt, sondern nur die Schneidkanten. Dies schont das Werkstück und zudem auch das Vorritzwerkzeug, weil weniger Reibung und im Ergebnis weniger Hitze entstehen.

Mindestens ein Ritzzahn der Ritzzahn-Anordnung, vorzugsweise alle Ritzzähne derselben, weisen einen am Blattkörper angeordneten Schneidkörper auf, der die Hauptschneidkante und die Nebenschneidkante als Ganzes, zumindest aber einen Abschnitt einer Nebenschneidkante, aufweist. Vorzugsweise weist ein derartiger Schneidkörper zwei Nebenschneidkanten an einander entgegengesetzten Seiten auf. Der Schneidkörper besteht aus einem härteren Material als der Blattkörper. Somit kann der Blattkörper beispielsweise eine relativ elastische Eigenschaft aufweisen, während der Schneidkörper demgegenüber deutlich härter ist und sich optimal zum Einschneiden in das Werkstück eignet.

Ein bevorzugtes Konzept sieht vor, dass der Schneidkörper eine Vickershärte von mindestens 1500 HV, bevorzugt 2000 HV, vorzugsweise mindestens 3000 HV aufweist. HV steht dabei für die Härte nach Vickers. Bevorzugt ist es vor allen Dingen, wenn die Vickershärte des Schneidkörpers insgesamt oder im Bereich der Hauptschneidkante oder Nebenschneidkante mindestens 4000 HV, sogar mindestens 4500 HV beträgt. Ein bevorzugtes Konzept sieht weiterhin vor, dass der Schneidkörper aus einem Nichtmetall besteht. Beispielsweise kann der Schneidkörper aus Keramikmaterial sein. Weiterhin hat sich in der Praxis als vorteilhaft herausgestellt, wenn der Schneidkörper aus Diamant-Material oder aus polykristallinem Diamant-Material besteht. Die Schneidkörper können aber auch beispielsweise aus Hartmetall bestehen, d. h., dass sie eine Härte von beispielsweise etwa 1500 HV haben.

Der Blattkörper des Vorritzwerkzeugs hat vorzugsweise eine Härte von ca. 350-480 HV, insbesondere ca. 400-450 HV.

Ein Grundgedanke dabei ist es, dass der Schneidkörper zwar aufgrund seiner Härte relativ spröde ist, was aber bei dem zu bearbeitendem Material, nämlich regelmäßig einer Beschichtung des Werkstücks, insbesondere einer Spanplatte, kein Problem darstellt. Das vom Vorritzwerkzeug zu schneidende oder zu ritzende Material des Werkstücks hat eine homogene Qualität, so dass der Schneidkörper sozusagen gleichmäßig beansprucht wird. Demgegenüber können im Kern des Werkstücks, der durch das Sägeblatt oder Sägewerkzeug zu schneiden ist, Einschlüsse, harte Abschnitte oder dergleichen vorgesehen sein, welche jedoch das Vorritzwerkzeug nicht beeinträchtigen. Diese Einschlüsse oder harten Bereiche werden vom Sägeblatt oder Sägewerkzeug zerschnitten.

Der Schneidkörper ist vorzugsweise rückseitig oder an seiner Rückseite bezüglich einer Schneidrichtung, in der die mindestens eine Hauptschneidkante und die mindestens eine Nebenschneidkante zum Einschneiden in das Werkstück vorgesehen sind, im Bereich der Hauptschneidkante und ganz oder teilweise im Bereich der Nebenschneidkante(n), also im Bereich mindestens eines Abschnitts der mindestens einen Nebenschneidkante, durch den Blattkörper abgestützt. Somit können große Antriebskräfte vom Blattkörper auf den Schneidkörper übertragen werden. Dies ist auch bei der nachfolgenden Maßnahme der Fall, bei der vorteilhaft vorgesehen ist, dass der Blattkörper an der Rückseite des Schneidkörpers eine bezüglich der Drehachse konvexe, beispielsweise kreisringförmige Außenumfangskontur aufweist. Mithin ist also der Blattkörper an der Rückseite des Schneidkörpers sozusagen massiv und entfaltet eine Stützwirkung.

Der Blattkörper erstreckt sich vorzugsweisen nach radial außen bezüglich der Drehachse neben der mindestens einen Nebenschneidkante bis in den Bereich der Hauptschneidkante.

Sozusagen in Arbeitsrichtung oder Drehrichtung vorn sind Spanräume bei einem oder mehreren Ritzzähnen vorteilhaft. Vorteilhaft ist vorgesehen, dass vor mindestens einem Ritzzahn, vorzugsweise vor allen Ritzzähnen oder mehreren Ritzzähnen, der Ritzzahn-Anordnung ein Spanraum angeordnet ist. Der Spanraum kann beispielsweise in der Art einer Mulde ausgestaltet sein. Vorteilhaft ist es, wenn sich der Spanraum V-förmig oder U-förmig vom radialen Außenumfang des Blattkörpers nach radial innen zur Drehachse erstreckt. Bevorzugt hat der Spanraum einen begrenzten Winkelbereich, beispielsweise von maximal 30°, vorzugsweise maximal 20° oder 15° bezüglich der Drehachse. Ein Spanraum über einen größeren Winkelbereich könnte den Nachteil haben, dass er sich bis zum Rücken oder zur Rückseite des in Drehrichtung vorauseilenden Ritzzahns erstreckt, so dass dieser an seinem Rücken sozusagen nicht mehr optimal durch den Blattkörper abgestützt ist.

Der Blattkörper hat vorzugsweise einen im Wesentlichen kreisrunden Außenumfang bezüglich der Drehachse. An diesem Außenumfang sind vorzugsweise nur bezüglich einer Schneidrichtung, in der die mindestens eine Hauptschneidkante zum Einschneiden in das Werkstück vorgesehen ist, ein einer Hauptschneidkante vorgelagerter Spanraum oder mehrere, jeweils einer Hauptschneidkante vorgelagerte Spanräume vorgesehen. Ansonsten hat der Blattkörper den kreisrunden Außenumfang, d.h. er taucht mit seinem Außenumfang beim Arbeitsbetrieb des Vorritzwerkzeugs in einen Abschnitt der hergestellten Ritze ein.

Es sei erwähnt, dass es zwar vorteilhaft ist, wenn der Blattkörper von Sägeblatt und/oder Vorritzwerkzeug plane oder ebene Flachseiten hat. Grundsätzlich möglich ist, dass beispielsweise eine Flachseite eine Art Bombierung oder Wölbung aufweist, insbesondere zur Maschinenaufnahme hin. Die vorgenannte Dicke des Blattkörpers beträgt beim Sägeblatt vorzugsweise etwa 1 mm bis 1,6 mm. Der Blattkörper des Vorritzwerkzeugs hat vorzugsweise eine Dicke von ca. 1,2 mm -2 mm.

Das Sägewerkzeug ist beispielsweise zum Eindringen in das Werkstück mit einer größeren Eindringtiefe als das Vorritzwerkzeug ausgestaltet und/oder vorgesehen.

Ein erfindungsgemäßes Vorritzwerkzeug lässt sich auch wie folgt definieren:
Vorritzwerkzeug für eine Sägemaschine, insbesondere für eine Sägemaschine in Gestalt einer Hand-Sägemaschine oder einer halbstationären Sägemaschine, oder als Bestandteil dieser Sägemaschine, wobei das Vorritzwerkzeug zum drehbaren Antreiben um eine Drehachse ausgestaltet ist und einen scheibenförmigen Blattkörper mit voneinander abgewandten Flachseiten aufweist, der in seinem von der Drehachse durchsetzten Zentrum eine Maschinenaufnahme zur lösbaren Befestigung an einer Vorritzer-Werkzeugaufnahme der Sägemaschine und an seinem radialen Außenumfang bezüglich der Drehachse eine Ritzzahn-Anordnung zum Einbringen einer Ritze in eine erste Werkstückoberfläche eines Werkstücks aufweist, wobei die Ritzzahn-Anordnung mindestens einen Ritzzahn mit einer insbesondere rechtwinkelig quer zu den Flachseiten und insbesondere parallel zu der Drehachse verlaufenden Hauptschneidkante zur Herstellung eines Ritzen-Bodens der Ritze, die zwischen Nebenschneidkanten zur Herstellung von Ritzen-Seitenflanken der Ritze verläuft, wobei das Vorritzwerkzeug insbesondere zur Herstellung einer solchen Ritze ausgestaltet ist, dass die Sägemaschine anhand eines insbesondere als Sägeblatt ausgestalteten Sägewerkzeugs einen mit der Ritze fluchtenden Sägeschnitt von einer zu der ersten Werkstückoberfläche entgegengesetzten zweiten Werkstückoberfläche des Werkstücks her mit einer gegenüber einer Ritzen-Breite der Ritze geringeren Sägeschnitt-Breite des Sägeschnitt in das Werkstück einbringen kann, so dass das Werkstück an den Ritzen-Seitenflanken nicht ausreißt, wobei ein sich um die Maschinenaufnahme radial außen erstreckender Außendurchmesser des Vorritzwerkzeugs maximal 80 mm beträgt, und wobei bezüglich der Drehachse radial äußere Endbereiche der Nebenschneidkanten einen ersten Querabstand parallel zu der Drehachse und bezüglich der Drehachse radial innere, zum Einschneiden der Ritze in das Werkstück vorgesehene Endbereiche der Nebenschneidkanten einen zweiten Querabstand parallel zu der Drehachse aufweisen, wobei eine Breite der Ritze an ihrem Ritzen-Boden durch den ersten Querabstand definiert ist und die Ritze maximal entsprechend der Breite des zweiten Querabstands herstellbar ist sind und der zweite Querabstand größer als der Querabstand ist, und wobei der erste Querabstand maximal das 0,75 fache des zweiten Querabstands beträgt und/oder der erste Querabstand oder die Breite der Hauptschneidkante kleiner als ein zu der Drehachse paralleler Abstand der Flachseiten des Blattkörpers im Bereich des mindestens einen Ritzzahns voneinander ist.

Bei einem derartigen Vorritzwerkzeug ist es weiterhin vorteilhaft, wenn die Nebenschneidkanten eine flache Neigung zur Hauptschneidkante aufweisen. Beispielsweise sind die Nebenschneidkanten bezüglich der Hauptschneidkante nur um einen Winkel von maximal 45° Grad geneigt, vorzugsweise nur 30° Grad geneigt. Die Geometrien von Nebenschneidkante und Hauptschneidkante sind vorzugsweise so gewählt, dass die Ritze einen V-förmigen Querschnitt mit flach nach unten geneigten Schenkeln aufweist.

Weiterhin ist es vorteilhaft, wenn eine Kombination aus Sägewerkzeug und Vorritzwerkzeug derart getroffen ist, dass eine das Sägewerkzeug maximal 50% der Querbreite der Ritze, die das Vorritzwerkzeug hergestellt hat, bei der Herstellung eines Sägeschnitts aus dem Werkstück herausschneidet.

Vor den Blattkörper des Sägewerkzeugs steht vorzugsweise ein Schneidkörper vor, der die Hauptschneidkante und die Nebenschneidkanten aufweist. Der Schneidkörper weist einen quer vor die jeweilige Flachseite des Blattkörpers vorstehenden Abschnitt auf, an dem eine jeweilige Nebenschneidkante angeordnet ist. Dieser Abschnitt steht vorzugsweise mindestens 30 %, vorzugsweise mindestens 40 % oder 50 % der Dicke des Blattkörpers vor die jeweilige Flachseite vor, wobei die Dicke der Abstand zwischen den Flachseiten ist.

Der Schneidkörper weist vorzugsweise einen stufigen Verlauf auf derart, dass ein an einer radialen Innenseite des Schneidkörpers, die zum Blattkörper hin orientiert ist, mindestens eine Stufe ausgebildet ist, die nicht zum Einschneiden in das Werkstück vorgesehen und/oder ausgestaltet ist. Von der Stufe bis zur Nebenschneidkante erstreckt sich vorteilhaft ein nichtschneidender Abschnitt des Schneidkörpers. Diese Stufe ist eine nichtschneidende Stufe und/oder weist keine zum Schneiden eine Werkstoffes vorgesehene und/oder ausgestaltete Schneidkante.

Vorzugsweise weist der mindestens eine Ritzzahn einen Abschnitt zwischen der Nebenschneidkante und dem Blattkörper auf, der nicht zum Einschneiden in das Werkstück vorgesehen und ausgestaltet ist und/oder parallel zur Flachseite zur daneben liegenden Flachseite des Blattkörpers verläuft und/oder eine Stufe zu dem Blattkörper hin umfasst.

Nachfolgend wird ein Ausführungsbeispiel der Erfindung anhand der Zeichnung erläutert. Es zeigen:

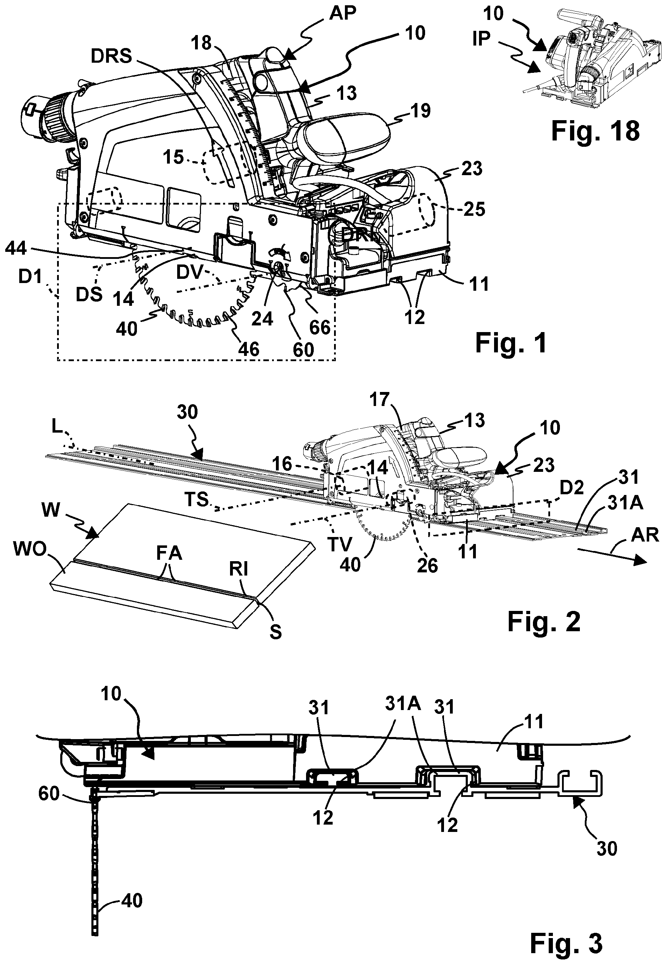

- Figur 1: eine perspektivische Schrägansicht einer Hand-Sägemaschine mit einem Sägewerkzeug und einem Vorritzwerkzeug in eine Aktivposi-tion,
- Figur 2: die Hand-Sägemaschine gemäß Figur 1, jedoch auf einer Führungs-schiene, wobei zusätzlich noch ein Werkstück mit einem Sägeschnitt, der durch die Hand-Werkzeugmaschine gemäß Figuren 1 und 2 hergestellt ist, dargestellt ist,
- Figur 3: eine Frontansicht auf die Anordnung gemäß Figur 2, wobei nur ein Ausschnitt gemäß einem Detail D2 der Figur 2 dargestellt ist,

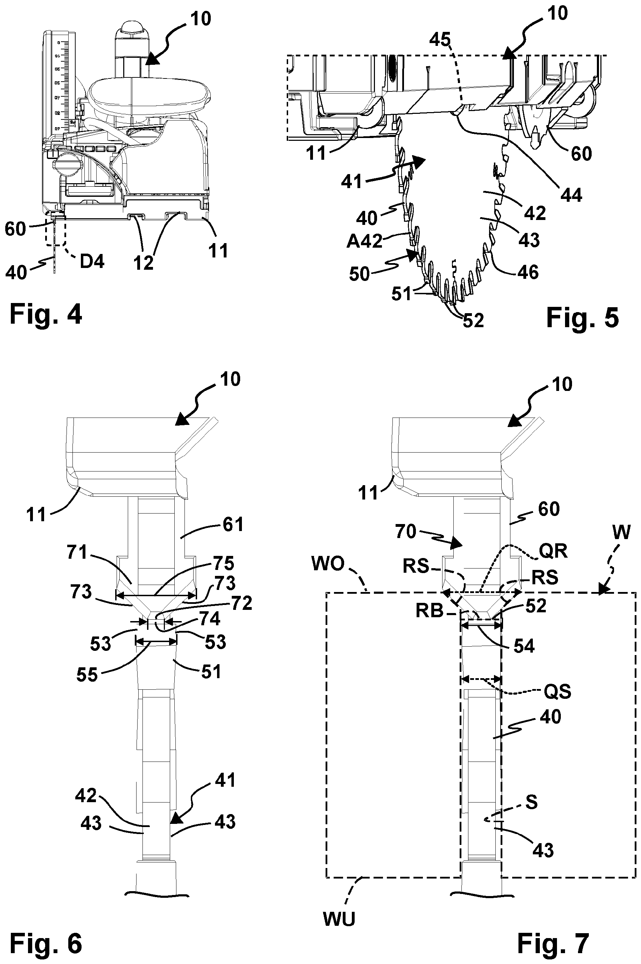

- Figur 4: eine Frontalansicht von vorn auf die Hand-Werkzeugmaschine ge-mäß Figur 1,
- Figur 5: eine perspektivische Teil-Schrägansicht auf die Hand-Werkzeugmaschine gemäß Figur 1 von schräg hinten, etwa entsprechend einem Detail D1 in Figur 1,
- Figur 6: ein Detail D4 aus Figur 4,
- Figur 7: das Detail gemäß Figur 6, jedoch mit einem schematisch dargestellten Werkstück und einem darin hergestellten Sägeschnitt,
- Figur 8: eine perspektivische Schrägansicht des Vorritzwerkzeugs der Hand-Werkzeugmaschine gemäß vorstehender Figuren,
- Figur 9: das Vorritzwerkzeug gemäß Figur 8, jedoch in Seitenansicht,
- Figur 10: eine Frontalansicht des Vorritzwerkzeugs gemäß Figuren 8 und 9,
- Figur 11: ein Detail D10 aus Figur 9 mit einem einzigen Vorritzzahn,
- Figur 12: eine alternative Ausführungsform des Vorritzwerkzeugs mit einem stufenförmigen Ritzzahn,
- Figur 13: ein Detail D12 aus Figur 12,
- Figur 14: ein weiteres Ausführungsbeispiel eines Vorritzwerkzeugs mit einem balligen Ritzzahn,
- Figur 15: ein Detail D14 aus Figur 14,
- Figur 16: ein weiteres Ausführungsbeispiel eines Vorritzwerkzeugs mit einem Ritzzahn, der konkave Nebenschneidkanten aufweist,
- Figur 17: ein Detail D16 aus Figur 16, und
- Figur 18: die Hand-Sägemaschinen gemäß Figur 1, jedoch in einer Inaktivposition.

Eine Hand-Sägemaschine 10 ist zur Herstellung eines Sägeschnitts S in ein Werkstück W vorgesehen und ausgestaltet. Die Hand-Sägemaschine kann beispielsweise frei über eine erste Werkstückoberfläche WO oder Werkstückoberseite des Werkstücks W hinweg bewegt werden, wobei eine Führungseinrichtung 11, beispielsweise ein Sägetisch, über die Werkstückoberfläche WO geführt wird. Es ist aber auch möglich, die Führungseinrichtung 11 auf eine Führungsschiene 30 aufzusetzen, wobei Führungskonturen 12 der Führungseinrichtung 11 in Eingriff mit Führungskonturen 31 der Führungsschiene 30 gelangen, beispielsweise sich in einer Längsachse L erstreckende Führungsvorsprünge 31A der Führungsschiene 30, die Teile der Führungskonturen 31 bilden, in entsprechende Führungsnuten der Führungskonturen 12 der Führungseinrichtung 11 eingreifen.

Die Hand-Werkzeugmaschine 10 kann jedenfalls in einer Arbeitsrichtung AR entlang des Werkstücks W geführt werden, um einen sich dann in der Arbeitsrichtung AR erstreckenden Sägeschnitt S in das Werkstück einzubringen.

Die Hand-Sägemaschine 10 weist ein Sägeaggregat 13 mit einer Sägen-Werkzeugaufnahme 14 auf. Die Sägen-Werkzeugaufnahme 14 ist um Drehachse DS durch einen Sägen-Antriebsmotor 15 antreibbar. An der Sägen-Werkzeugaufnahme 14 ist ein Sägewerkzeug 40, beispielsweise ein Sägeblatt 41, anordenbar oder angeordnet, welches zum Einbringen des Sägeschnitts S vorgesehen ist. Die Sägen-Werkzeugaufnahme 14 greift beispielsweise in eine Maschinenaufnahme 44 eines Blattkörpers 42 des Sägeblatts 41 oder Sägewerkzeugs 40 ein. Die Drehachse DS durchsetzt dann eine Zentrum 45 der Maschinenaufnahme 44. Flachseiten 43 des Blattkörpers 42 verlaufen beispielsweise rechtwinkelig zur Drehachse DS, wenn das Sägewerkzeug 40 an der Sägen-Werkzeugaufnahme 14 angeordnet und montiert ist.

Die Hand-Sägemaschine 10 ist eine Tauchsäge. Eine Ausgestaltung der Hand-Sägemaschinen 10 als Pendelhaubensäge ohne weiteres auch möglich wäre.

Das Sägeaggregat 13 ist beispielsweise als Ganzes anhand eines Sägen-Tiefeneinstelllagers 16 um eine Tiefeneinstellachse TS zwischen einer Aktivposition AP, bei der das Sägewerkzeug 40 an einer von dem Sägeaggregat 13 abgewandten Seite vor die Führungseinrichtung 11 vorsteht, und einer Inaktivposition IP, bei der das Sägeblatt 41 oder das Sägewerkzeug 40 hinter die von dem Sägeaggregat 13 abgewandte Seite der Führungseinrichtung 11 zurückverstellt ist, so dass eine Verletzung eines Bedieners der Hand-Sägemaschine 10 vermieden werden kann. Anhand des Sägen-Tiefeneinstelllagers 16, welches das Sägeaggregat 13 um eine Tiefeneinstellachse TS schwenkbar lagert, kann das Sägewerkzeug 40 in verschiedene Tiefeneinstellpositionen zur Einbringung verschieden tiefer Sägeschnitte S in das Werkstück W verstellt werden. In den verschiedenen Tiefeneinstellpositionen steht das Sägewerkzeug 40 verschieden weit vor die vom Sägeaggregat 13 abgewandte Unterseite der Führungseinrichtung 11 vor.

Das Sägewerkzeug 40 schneidet von einer von der ersten Werkstückoberfläche oder Werkstückoberseite WO abgewandten zweiten Werkstückoberfläche WU oder Werkstückunterseite in das Werkstück W ein. Dabei besteht prinzipiell die Gefahr, dass an der Werkstückoberfläche WO oder Werkstückoberseite das Werkstück W, beispielsweise ein Holz-Werkstück ausreißt. Zur Vermeidung dieser Problematik weist die Hand-Werkzeugmaschine ein Vorritzaggregat 23 sowie ein Vorritzwerkzeug 60 auf.

Das Vorritzaggregat 23 ist in Arbeitsrichtung AR vor dem Sägeaggregat 13 angeordnet und dient zum Einbringen einer Ritze RI in das Werkstück W an der Werkstückoberseite oder ersten Werkstückoberfläche WO. Dadurch wird ein Ausreißen des Werkstücks W verhindert oder ist zumindest deutlich weniger geringer als ohne Verwendung des Vorritzaggregats 23.

Das Vorritzaggregat 23 weist eine Vorritzer-Werkzeugaufnahme 24 auf, die um eine Drehachse DV durch einen Vorritzer-Antriebsmotor 25 angetrieben oder antreibbar ist.

An der Vorritzer-Werkzeugaufnahme ist das Vorritzwerkzeug 60 lösbar anordenbar.

Das Vorritzwerkzeug 60 weist ein Vorritzerblatt 61 mit einem Blattkörper 62 auf. Eine Maschinenaufnahme 64 durchsetzt ein Zentrum des Blattkörpers 62. Die

Maschinenaufnahme 64 ist an der Vorritzer-Werkzeugaufnahme 24 lösbar montierbar, beispielsweise durch eine Schraubenhalterung oder dergleichen. Die Drehachse DV durchsetzt das Zentrum 65, wenn das Vorritzwerkzeug 60 an der Vorritzer-Werkzeugaufnahme 24 befestigt ist.

Das Vorritzaggregat 23 könnte nun direkt mit dem Sägeaggregat 23 gekoppelt sein, so dass beide, das Sägeaggregat 13 und das Vorritzeraggregat 23 anhand des Sägen-Tiefeneinstelllagers 16 zwischen einer vor die Führungseinrichtung 11 vorstehenden Aktivposition von Sägewerkzeug 40 und Vorritzwerkzeug 60 und einer Inaktivposition verstellbar sein, bei der das Vorritzwerkzeug 60 sowie das Sägewerkzeug 40 hinter die vom Sägeaggregat 13 abgewandte Seite der Führungseinrichtung 11 zurückverstellt sind. Bei der Hand-Sägemaschine 10 ist jedoch eine Anordnung getroffen, bei der das Vorritzaggregat separat vom Sägeaggregat 13 tiefeneinstellbar ist, nämlich anhand eines Vorritzer-Tiefeneinstelllagers 26. Das Vorritzer-Tiefeneinstelllager 26 lagert das Vorritzaggregat 23 bezüglich der Führungseinrichtung 11 um eine Tiefeneinstellachse TV schwenkbar. Vorteilhaft nimmt das Sägeaggregat 13 bei seiner Verstellung aus der Inaktivposition in die Aktivposition das Vorritzaggregat 23 in dessen Aktivposition mit, bei der das Vorritzwerkzeug 60 zur Einbringung der Ritze RI vor die Führungseinrichtung 11 vorsteht.

Die Handhabung der Hand-Sägemaschine 10 gelingt recht einfach, indem die Hand-Sägemaschine 10 beispielsweise einen am Sägengehäuse 17 des Sägeaggregats 13 in Arbeitsrichtung AR hinteren Handgriff 18 sowie einen in Arbeitsrichtung AR vorderen Handgriff 19 aufweist, wobei die Handgriffe 18, 19 zum Ergreifen durch einen Bediener geeignet und vorgesehen sind.

Das Sägewerkzeug oder Sägeblatt 40 weist eine Sägezahnanordnung 50 mit einer Vielzahl von Sägezähnen 51 auf. Die Sägezähne 51 sind an einem Außenumfang A42 des Blattkörpers 42 angeordnet. Hauptschneidkanten 52, die nach radial außen bezüglich des Zentrums 45 vor das Sägewerkzeug 40 vorstehen, bestimmen einen Außendurchmesser 46 des Sägewerkzeugs 40.

Die Hauptschneidkanten 52 verlaufen quer zwischen den Flachseiten 43 des Blattkörpers 42 und/oder parallel zur Drehachse DS, wenn das Sägewerkzeug 40 an der Hand-Sägemaschine 10 angeordnet ist.

Die Hauptschneidkanten 52 erstrecken sich zwischen Nebenschneidkanten 53, die in Bezug auf die Hauptschneidkanten 52 in einem Winkel von mindestens 80° verlaufen, also relativ steil bezüglich der Hauptschneidkante 52 orientiert sind. Beispielsweise ist ein Querabstand 54 der Nebenschneidkante 53 im Bereich der Hauptschneidkanten 52 kleiner als ein zweiter Querabstand der Nebenschneidkanten zueinander, den diese an ihrem von der Hauptschneidkante 52 am weitesten entfernten Bereich haben.

Das Sägewerkzeug 40 dient zum Einschneiden in das Werkstück W von der zweiten Werkstückoberfläche WU oder Unterseite des Werkstücks W und zum Durchtrennen des Werkstücks W.

Eine Drehrichtung DRS der Sägen-Werkzeugaufnahme 14 oder eine zum Betrieb des Sägewerkzeugs 40 vorgesehene Drehrichtung DRS ist also beispielsweise derart, dass das Sägewerkzeug 40 in Bezug auf die Arbeitsrichtung AR von einer Unterseite oder von der Hand-Sägemaschinen 10 abgewandten Seite WU in das Werkstück W einschneidet.

Das Vorritzwerkzeug 60 hingegen ist zum Eingreifen in das Werkstück W von der ersten Werkstückoberfläche WO her vorgesehen und ausgestaltet. Eine Drehrichtung DRI der Vorritzer-Werkzeugaufnahme 24 ist entgegengesetzt zu der Drehrichtung DRS.

Das Vorritzwerkzeug 60 und das Sägewerkzeug 40 sind also für einen Betrieb mit einander entgegengesetzten Drehrichtungen DRI und DRS vorgesehen und ausgestaltet.

Das Vorritzwerkzeug 60 ist wie erläutert auch als ein Blatt-Werkzeug oder als ein sägeblattähnliches Werkzeug ausgestaltet, wobei beim Vorritzwerkzeug 60 eine Ritzzahnanordnung 70 vorgesehen ist.

Die Ritzzahnanordnung 70 umfasst einen oder mehrere Ritzzähne 71, vorzugsweise nur einen einzigen Ritzzahn 71, der zum Einbringen der Ritze RI vorgesehen und ausgestaltet ist.

Der mindestens eine Ritzzahn 71 weist eine Hauptschneidkante 72 auf, die quer zwischen den Flachseiten 63 des Blattkörpers 62 verlaufen. Ein radialer Abstand R72 der Hauptschneidkante 72 zum Zentrum 65 des Vorritzwerkzeugs 60 bestimmt einen Außendurchmesser 66 des Vorritzwerkzeugs 60. Der Außendurchmesser 66 des Vorritzwerkzeugs 60 ist deutlich kleiner als der Außendurchmesser 46 des Sägewerkzeugs 40.

Die Hauptschneidkante 72 des Ritzzahns 71 ist zwischen Nebenschneidkanten 73 des Ritzzahns 71 angeordnet. Im Bereich des Ritzzahns 71 weisen die Nebenschneidkanten 73 einen ersten Querabstand 74 auf, der kleiner als ein zweiter Querabstand 75 ist, den die Nebenschneidkanten 73 an ihrem von der Hauptschneidkante 72 am weitesten entfernten Bereich aufweist. Der zweite Querabstand 75 ist bestimmend für eine maximale Breite oder Querbreite QR der Ritze RI an der ersten Werkstückoberfläche WO. Der erste Querabstand 74, also im Prinzip die Querbreite der Hauptschneidkante 72, bestimmt die Breite der Ritze RI an ihrem Ritzen-Boden RB.

Der Ritzen-Boden RB wird vorzugsweise durch das Sägewerkzeug 40 sozusagen weggeschnitten, während sich vom Ritzen-Boden RB seitlich weg erstreckende Ritzen-Seitenflanken RS der Ritze RI zumindest teilweise stehen bleiben. Dadurch hat das Werkstück W eine Fase FA neben dem Sägeschnitt S bzw. der Schnittkante, die durch den Sägeschnitt S erzeugt ist.

Insbesondere ist eine solche Fase FA bei einem als Dämmstoffmaterial oder Dämmstoffplatte ausgestalteten Werkstück W.

Die Ritzzahnanordnung 70 weist eine andere Geometrie als die Sägezahn-Anordnung 50 auf.

Der erste Querabstand 74 des Ritzzahns 71 ist deutlich kleiner als der erste Querabstand 54 der Sägezähne 51. Somit schneidet also das Sägewerkzeug 40 nicht nur im Bereich des Ritzen-Bodens RB in das Werkstück Wein, sondern schneidet auch noch in die Ritzen-Seitenflanken RS der Ritze RI zumindest partiell ein.

Allerdings erkennt man, dass der zweite Querabstand 55 der Sägezähne 51 bestimmend ist für die Querbreite QS des Sägeschnittes S, wobei diese Querbreite kleiner ist als die Querbreite QR der Ritze RI, weil der zweite Querabstand 75 des Ritzzahns 71 größer als der zweite Querabstand 55 eines Sägezahns 51 ist. Mithin schneidet also das Vorritzwerkzeug 60 zwar weniger tief in das Werkstück W ein, jedoch mit einer größeren Breite als das Sägewerkzeug 40. Damit bleiben die Ritzen-Seitenflanken RS zumindest partiell bestehen, so dass die Fase FA neben der Schnittkante des Sägeschnittes S ausgebildet wird.

Die Nebenschneidkanten 73 verlaufen in einem Neigungswinkel 76 zur Hauptschneidkante 72, wobei dieser Neigungswinkel ein relativ flacher Winkel ist, der beispielsweise maximal 60° beträgt, vorzugsweise noch weniger, beispielsweise maximal 50° oder wie im konkreten Ausführungsbeispiel der Nebenschneidkanten 73 etwa 45° beträgt.

Die Nebenschneidkanten 73 schneiden die Hauptschneidkante 72 an einem Schnittpunkt 77. Die Nebenschneidkanten 73 verlaufen bis zu dem zweiten Querabstand 75, der durch den von der Hauptschneidkante 72 jeweils am weitesten entfernten Punkt einer jeweiligen Nebenschneidkante 73 definiert ist, der ein Übergangspunkt 78 der Nebenschneidkante 73 zu einem nicht schneidenden Abschnitt 80 ist.

Die Nebenschneidkanten 73 sind geradlinige Nebenschneidkanten, verlaufen also entlang von Geraden G79 zwischen dem Schnittpunkt 77 und dem am weitest entfernten Punkt oder Übergangspunkt 78. Der Neigungswinkel 76 entspricht einem Winkel einer Geraden G72, die entlang der Hauptschneidkante 72 verläuft, und der zur Nebenschneidkante 73 parallelen Gerade G79.

Von dem jeweiligen Punkt 78 weg in Richtung des Zentrums 65 weist der Ritzzahn 71 jeweils einen nicht schneidenden Abschnitt 80 ab. Der nicht schneidende Abschnitt 80 verläuft parallel zu jeweils benachbarten Flachseite 63 des Blattkörpers 62, wobei der Ritzzahn 71 an einander entgegengesetzten Seiten jeweils einen nicht schneidenden Abschnitt 80 aufweist, der den vorgenannten Parallelverlauf aufweist.

Die nicht schneidenden Abschnitte 80, die Nebenschneidkanten 73 sowie die Hauptschneidkante 72 stehen vor einen Stützabschnitt 81 des Schneidkörpers 69 vor, mit dem die Hauptschneidkante 72, Nebenschneidkanten 73 sowie den nicht schneidenden Abschnitt 80 aufweisenden Schneidkörper 69 des Ritzzahns 71 am Blattkörper 62 abgestützt ist.

Der Schneidkörper 69 steht im Wesentlichen mit seinem die Hauptschneidkante 72 sowie die Nebenschneidkanten 73 aufweisenden Abschnitt vor den Blattkörper 62 nach radial außen bezüglich des Zentrums 65 vor. Die nicht schneidenden Abschnitte 80 sind an einem Abschnitt des Schneidkörpers 69 angeordnet, der nach radial außen nicht oder nur wenig vor den Blattkörper 62 vorsteht.

Dem Schneidkörper 69 ist ein Spanraum 68 in der Drehrichtung DRI des Vorritzwerkzeugs 60 vorgelagert.

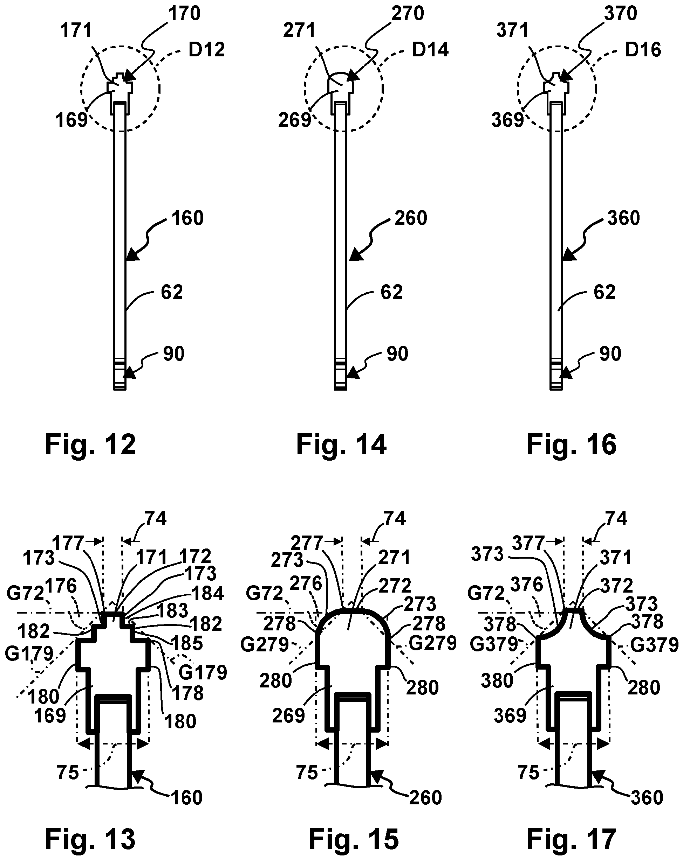

Ein alternatives Vorritzwerkzeug 160 gemäß Figuren 12 und 13 weist grundsätzlich die gleichen Komponenten auf wie das Vorritzwerkzeug 60, also unter anderem einen Blattkörper 62, wobei mindestens ein Schneidkörper 169 des Vorritzwerkzeugs 160 eine alternative Geometrie aufweist.

Der Schneidkörper 169 bildet einen Bestandteil einer Ritzzahn-Anordnung 170, und stellt einen Ritzzahn 171 bereit. Eine Hauptschneidkante 172 des Ritzzahns 171 dient wiederum zum Schneiden des Ritzen-Bodens RB, wobei Nebenschneidkanten 172 des Ritzzahns 171 einen stufigen Verlauf aufweisen. Beispielsweise ist der stufige Verlauf zwischen der Hauptschneidkante 172 sowie einem nicht schneidenden Abschnitt 180 vorgesehen, der grundsätzlich dem Abschnitt 80 des Ritzzahns 71 entspricht.

Mithin unterscheiden sich also Wesentlichen die Nebenschneidkanten 173 von den Nebenschneidkanten 73. Allerdings ist eine grundsätzliche Neigung bzw. ein Schrägverlauf der Nebenschneidkanten 173 ähnlich wie derjenige der Nebenschneidkanten 73. Beispielsweise ist eine Gerade G179, die vom Schnittpunkt 177 zwischen der Hauptschneidkante 172 und einer jeweiligen Nebenschneidkante 173 verläuft und weiterhin durch einen Übergangspunkt 178 zwischen der Nebenschneidkante 173 und dem nicht schneidenden Abschnitt 180, mit demselben Neigungswinkel 76 zu einer Geraden geneigt, die parallel zur Hauptschneidkante 172 verläuft, wie die Gerade G79.

Jede Nebenschneidkante 173 weist eine Stufe 182 auf, wobei die Stufe 182 einen Abschnitt 183 der Nebenschneidkante 173 umfasst, der parallel oder in einem flachen Winkel bezüglich der Hauptschneidkante 172 verläuft, sowie Abschnitte 184 und 185, die beispielsweise rechtwinkelig oder in einem steilen Winkel von etwa 105° bis 95° zur Hauptschneidkante 172 oder dem Abschnitt 183 verlaufen.

Bei einem Vorritzwerkzeug 260 gemäß Figuren 14 und 15 weist ein Schneidkörper 269 einer Ritzzahn-Anordnung 270 zur Bildung eines Ritzzahns 271 eine von den Ritzzähnen 71, 171 abweichende Geometrie auf.

Auch der Ritzzahn 271 weist eine Hauptschneidkante 272 auf, die zum Herstellen eines Ritzen-Bodens RB dient. Die Hauptschneidkante 272 erstreckt sich zwischen Nebenschneidkanten 273, die in einem von der Hauptschneidkante 272 entfernten Bereich in einen nicht schneidenden Abschnitt 280 übergehen, die den nicht-schneidenden Abschnitten 80, 180 entsprechen.

Die Nebenschneidkanten 273 weisen eine konkave oder ballige Gestalt auf, verlaufen also in einer vom Blattkörper 72 abgewandten Kurvenbahn oder dazu konkaven Kurvenlinie.

Eine Gerade, G279 die zwischen einem Schnittpunkt 277 zwischen der Hauptschneidkante 272 und einer jeweiligen Nebenschneidkante 273 einerseits sowie andererseits durch den Übergangspunkt 278 dieser Nebenschneidkante 273 zu dem nicht schneidenden Abschnitt 280 verläuft, ist in Bezug auf die Hauptschneidkante 272 im selben Neigungswinkel 76 geneigt, wie die Geraden G79, G179.

Bei einem Vorritzwerkzeug 360 gemäß Figuren 16 und 17 ist im Unterscheid zum Vorritzwerkzeug 260 ein konkaver Verlauf von Nebenschneidkanten 373 vorgesehen, die an einem Ritzzahn 371 einer Ritzzahn-Anordnung 370 angeordnet ist. Die Nebenschneidkanten 73 verlaufen also konkav bezüglich einer Hauptschneidkante 372. Wiederum ist zwischen der Hauptschneidkante 372 und der jeweils benachbarten Nebenschneidkante 373 ein Schnittpunkt 377 definiert, durch den eine Gerade G379 verläuft, die andererseits durch einen Übergangspunkt 378 zwischen einer Nebenschneidkante 373 und dem nicht schneidenden Abschnitt 380 verläuft. Die Gerade G379 hat denselben Neigungswinkel 376 wie die Neigungswinkel 76, 176 sowie 276.

Die ersten Querabstände 74 zwischen den Nebenschneidkanten 73, 173, 273 und 373 sind jeweils kleiner als die zweiten Querabstände 75, die die Nebenschneidkanten 73, 173, 273 und 373 im Bereich der Übergangspunkte 78, 178, 278 und 378 aufweisen.

Während die konvexen oder balligen Nebenschneidkanten 273 die Gerade G279 sozusagen durchdringen, weisen die Nebenschneidkanten 373 zwischen dem Schnittpunkt 377 sowie dem Übergangspunkt 378 einen Abstand zur Gerade G379 auf.

Alle Vorritzwerkzeuge 60, 160, 260 und 360 schneiden also eine flach geneigte, gegebenenfalls stufig konturierte (beim Vorritzwerkzeug 160) oder als Hohlkehle ausgestaltete (beim Vorritzwerkzeug 260) oder als runde, konkave Kontur ausgestaltete Fase FA in das Werkstück W, die auch nach dem Einbringen des Sägeschnittes S stehen bleibt.

Die Vorritzwerkzeuge 60, 160, 260, 360 weisen vorzugsweise mindestens eine Wuchtkontur 90 auf. Die Wuchtkontur 90 umfasst beispielsweise Wuchtaussparungen 91 und 92, zwischen denen ein Vorsprung 93 radial bezüglich der Drehachse DV vorsteht. Die Wuchtkontur 90 kompensiert eine Unwucht, die durch den einzigen Ritzzahn 71, 171, 271, 371 der Ritzzahn-Anordnung 70, 170, 270, 370 verursacht ist. Beispielsweise sind der Wucht-Vorsprung 93 und der Ritzzahn 71 an bezüglich des Zentrums 65 am Blattkörper 62 diametral entgegengesetzten Seiten angeordnet. Die Wuchtaussparungen 91, 92 sowie der Vorsprung 93 sind vorzugsweise einstückig mit dem Blattkörper 62. Mithin weist also der Blattkörper 62 Aussparungen zur Herstellung der Wuchtaussparungen 91 und 92 auf.

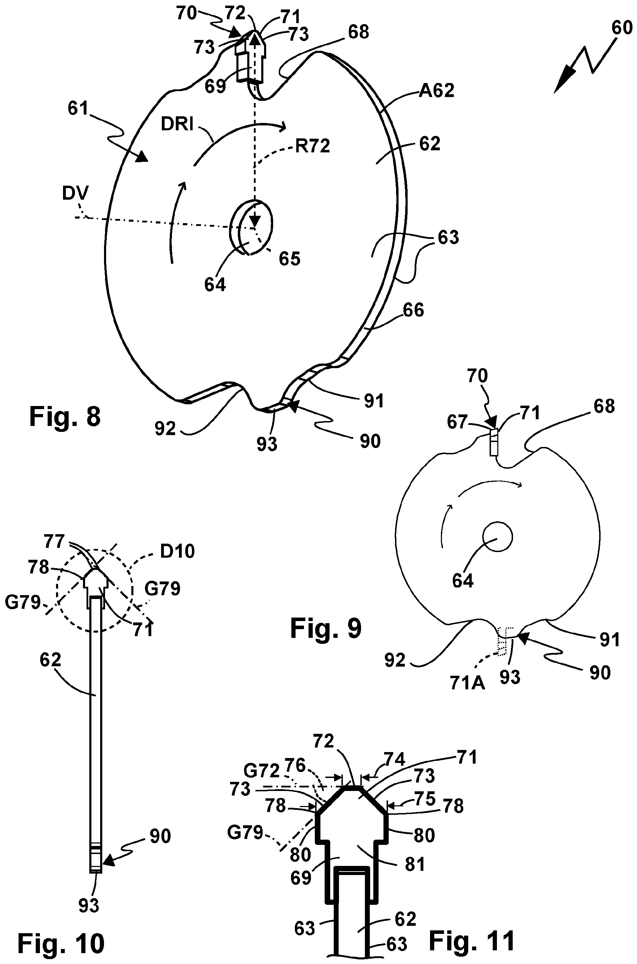

Die Ritzzähne 71, 171, 271, 371 sind bezüglich einer Radialen, die durch das Zentrum 65 des Vorritzwerkzeugs 60, 160, 260, 360 verläuft, nicht oder nur unwesentlich geneigt. Beispielsweise verlaufen die Vorderseiten der Ritzzähne 71, 171, 271, 371 parallel zu der Radialen, die beispielsweise als radialer Abstand R72 in Figur 8 eingezeichnet ist.

Beispielhaft ist beim Vorritzwerkzeug 60 eingezeichnet, dass auch mehrere Ritzzähne vorhanden sein können, beispielsweise in der Position der Wuchtkontur 90 ein weiterer Ritzzahn 71A. Die Ritzzähne 71 und 71A weisen beispielsweise einen Winkelabstand von 180° auf.

Vorteilhaft ist es, wenn bei einem erfindungsgemäßen Vorritzwerkzeug wenige Ritzzähne vorhanden sind, beispielsweise nur 2 oder 3 Ritzzähne.

Weiterhin ist es vorteilhaft, wenn eine von den Hauptschneidkanten 72 und/oder Nebenschneidkanten 73 in Drehrichtung rückwärtige Seite 67 eines Ritzzahns 71 eine Neigung von der jeweiligen Schneidkante weg aufweist, beispielsweise eine Neigung zu dem Außenumfang A62 des Vorritzwerkzeugs 60 hin.

Die Hauptschneidkante kann einen flach geneigten V-förmigen Verlauf aufweisen, wobei ein radial bezüglich der Drehachse äußerster Bereich und ein Übergangspunkt zu der Nebenschneidkante, der radial weiter innen bezüglich der Drehachse ist als der radial äußerste Bereich, eine Neigung von Teilabschnitten der Hauptschneidkante bestimmen. Diese Neigung ist beispielsweise maximal 20 % oder 30 % der Neigung, die die sich an den Teilabschnitten der Hauptschneidkante anschließende Nebenschneidkante zu dem Teilabschnitt der Hauptschneidkante aufweist.

## Patentansprüche

1. Vorritzwerkzeug (60) für eine Sägemaschine, insbesondere für eine Sägemaschine in Gestalt einer Hand-Sägemaschine (10) oder einer halbstationären Sägemaschine, oder als Bestandteil dieser Sägemaschine, wobei das Vorritzwerkzeug (60) zum drehbaren Antreiben um eine Drehachse (DV) ausgestaltet ist und einen scheibenförmigen Blattkörper (62) mit voneinander abgewandten Flachseiten (63) aufweist, der in seinem von der Drehachse (DV) durchsetzten Zentrum (65) eine Maschinenaufnahme (64) zur lösbaren Befestigung an einer Vorritzer-Werkzeugaufnahme (24) der Sägemaschine und an seinem radialen Außenumfang (A62) bezüglich der Drehachse (DV) eine Ritzzahn-Anordnung (70) zum Einbringen einer Ritze (RI) in eine erste Werkstückoberfläche (WO) eines Werkstücks (W) aufweist, wobei die Ritzzahn-Anordnung (70) mindestens einen Ritzzahn (71) mit einer insbesondere rechtwinkelig quer zu den Flachseiten (63) verlaufenden Hauptschneidkante (72) zur Herstellung eines Ritzen-Bodens (RB) der Ritze (RI), die zwischen Nebenschneidkanten (73) zur Herstellung von Ritzen-Seitenflanken der Ritze (RI) verläuft, wobei das Vorritzwerkzeug (60) insbesondere zur Herstellung einer solchen Ritze (RI) ausgestaltet ist, dass die Sägemaschine anhand eines insbesondere als Sägeblatt (41) ausgestalteten Sägewerkzeugs (40) einen mit der Ritze (RI) fluchtenden Sägeschnitt (S) von einer zu der ersten Werkstückoberfläche (WO) entgegengesetzten zweiten Werkstückoberfläche (WU) des Werkstücks (W) her mit einer gegenüber einer Ritzen-Breite der Ritze (RI) geringeren Sägeschnitt-Breite des Sägeschnitts (S) in das Werkstück (W) einbringen kann, so dass das Werkstück (W) an den Ritzen-Seitenflanken nicht ausreißt, wobei ein sich um die Maschinenaufnahme (64) radial außen erstreckender Außendurchmesser (66) des Vorritzwerkzeugs (60) maximal 80 mm beträgt, und wobei bezüglich der Drehachse (DV) radial äußere Endbereiche der Nebenschneidkanten (73) einen ersten Querabstand (74) parallel zu der Drehachse (DV) und bezüglich der Drehachse (DV) radial innere, zum Einschneiden der Ritze (RI) in das Werkstück (W) vorgesehene Endbereiche der Nebenschneidkanten (73) einen zweiten Querabstand (75) parallel zu der Drehachse (DV) aufweisen, wobei der erste Querabstand (74) bestimmend für eine Breite der Ritze am Ritzen-Boden (RB) und der zweite Querabstand (75) bestimmend für eine maximale Breite der Ritze (RI) an der ersten Werkstückoberfläche (WO) des Werkstücks (W) sind und der zweite Querabstand (75) mindestens so groß wie der erste Querabstand (74) ist, **dadurch gekennzeichnet,**
**dass** der erste Querabstand (74) maximal das 0,75 fache des zweiten Querabstands (75) beträgt und/oder kleiner als ein zu der Drehachse (DV) paralleler Abstand der Flachseiten (63) des Blattkörpers (62) im Bereich des mindestens einen Ritzzahns (71) voneinander ist.

2. Vorritzwerkzeug (60) nach Anspruch 1, **dadurch gekennzeichnet, dass** der erste Querabstand (74) maximal das 0,6 fache, insbesondere maximal das 0,5 fache, weiter bevorzugt maximal das 0,4 fache und noch weiter bevorzugt das 0,3 fache des zweiten Querabstand (75) beträgt.

3. Vorritzwerkzeug (60) nach Anspruch 1 oder 2, **dadurch gekennzeichnet, dass** der erste Querabstand (74) maximal 75 %, weiter bevorzugt maximal 60 %, noch weiter bevorzugt maximal 50 % des Abstands der Flachseiten (63) des Blattkörpers (62) beträgt.

4. Vorritzwerkzeug (60) nach einem der vorhergehenden Ansprüche, **dadurch gekennzeichnet, dass** eine Gerade, die durch einen Schnittpunkt zwischen der Hauptschneidkante (72) und mindestens einer der Nebenschneidkanten (73) sowie durch einen von der Hauptschneidkante (72) am weitesten entfernten Punkt der mindestens einen Nebenschneidkante (73) und/oder einen Übergangspunkt (78) zwischen der Nebenschneidkante (73) und einem nicht schneidenden und/oder zur Flachseite (63) des Blattkörpers (62) parallelen oder zum Zentrum (65) der Maschinenaufnahme (64) geneigten Abschnitt des mindestens einen Ritzzahns (71) verläuft, einen Winkel von maximal 60°, vorzugsweise maximal 50°, weiter bevorzugt maximal 45° und noch weiter bevorzugt maximal 40° oder 35° zu der Hauptschneidkante (72) aufweist.

5. Vorritzwerkzeug (60) nach einem der vorhergehenden Ansprüche, **dadurch gekennzeichnet, dass** die Hauptschneidkante (72) und mindestens eine der Nebenschneidkanten (73) oder beide Nebenschneidkanten (73) in einem Winkel von maximal 60°, vorzugsweise maximal 50°, weiter bevorzugt maximal 45° und noch weiter bevorzugt maximal 40° oder 35° zueinander verlaufen.

6. Vorritzwerkzeug (60) nach einem der vorhergehenden Ansprüche, **dadurch gekennzeichnet, dass** die Nebenschneidkanten (73) und/oder die mindestens eine Hauptschneidkante (72) geradlinig verlaufen.

7. Vorritzwerkzeug (60) nach einem der vorhergehenden Ansprüche, **dadurch gekennzeichnet, dass** eine oder beide Nebenschneidkanten (73) einen konvexen und/oder bogenförmigen und/oder konkaven Verlauf, von der mindestens einen Hauptschneidkante (72) weg aufweisen oder das mindestens eine Nebenschneidkante (73) einen stufenförmigen Verlauf aufweist.

8. Vorritzwerkzeug (60) nach einem der vorhergehenden Ansprüche, **dadurch gekennzeichnet, dass** die Nebenschneidkanten (73) und die mindestens eine Hauptschneidkante (72) im Querschnitt eine Trapezform bilden.

9. Vorritzwerkzeug (60) nach einem der vorhergehenden Ansprüche, **dadurch gekennzeichnet, dass** die Nebenschneidkanten (73) länger als die mindestens eine Hauptschneidkante (72) sind.

10. Vorritzwerkzeug (60) nach einem der vorhergehenden Ansprüche, **dadurch gekennzeichnet, dass** die Ritzzahn-Anordnung (70) maximal 6 Ritzzähne (71), insbesondere maximal 4 Ritzzähne (71) oder maximal 3 Ritzzähne (71) oder maximal 2 Ritzzähne (71), aufweist und/oder dass die Ritzzahn-Anordnung (70) nur einen einzigen Ritzzahn (71) oder mindestens zwei Ritzzähne (71) aufweist, die zueinander einen Winkelabstand bezüglich der Drehachse (DV) von mindestens 20° aufweisen, und/oder dass der Winkelabstand zwischen am Außenumfang (A62) des Blattkörpers (62) hintereinander angeordneten Ritzzähnen (71) mindestens 30°, vorzugsweise mindestens 45°, weiter bevorzugt mindestens 60° und noch weiter bevorzugt mindestens 90° ist.

11. Vorritzwerkzeug (60) nach einem der vorhergehenden Ansprüche, **dadurch gekennzeichnet, dass** bezüglich der Drehachse (DV) radial innere, zum Einschneiden der Ritze (RI) in das Werkstück (W) vorgesehene Endbereiche der Nebenschneidkanten (73) zum radialen Außenumfang (A62) des Vorritzwerkzeugs (60) eine solche Radialdistanz aufweisen, dass mit dem Vorritzwerkzeug (60) Ritzen (RI) unterschiedlicher Tiefe bis zu einer durch die Radialdistanz begrenzten Maximaltiefe herstellbar sind.

12. Vorritzwerkzeug (60) nach Anspruch 11, **dadurch gekennzeichnet, dass** die die Maximaltiefe der Ritze (RI) bestimmende Radialdistanz der Nebenschneidkanten (73) mindestens 1,2 mm, vorzugsweise mindestens 1,5 mm, weiter bevorzugt mindestens 2 mm, noch weiter bevorzugt mindestens 2,3 mm oder 2,5 mm, insbesondere mindestens 3 mm, ist.

13. Vorritzwerkzeug (60) nach einem der vorhergehenden Ansprüche, **dadurch gekennzeichnet, dass** an dem Blattkörper (62) mindestens eine Wuchtkontur (90), insbesondere eine Wuchtaussparung (91, 92), für den mindestens einen Ritzzahn (71) in einem Winkelabstand bezüglich des Außenumfangs (A62) des Vorritzwerkzeugs (60) angeordnet ist.

14. System umfassend ein Vorritzwerkzeug (60) nach einem der vorhergehenden Ansprüche sowie ein Sägewerkzeug (40) in Gestalt eines Sägeblatts (41) für die Sägemaschine, **dadurch gekennzeichnet, dass** das Sägeblatt (41) an einen scheibenförmigen Sägeblattkörper (41) mit voneinander abgewandten Flachseiten (43) aufweist, der in seinem von der Drehachse (DS) durchsetzten Zentrum (45) eine Maschinenaufnahme (44) zur lösbaren Befestigung an einer Sägen-Werkzeugaufnahme (14) der Hand-Sägemaschine (10) aufweist, an dessen radialem Außenumfang (A42) bezüglich der Drehachse (DS) eine Sägezahn-Anordnung (50) mit in Umfangsrichtung hintereinander angeordneten Sägezähnen (51) angeordnet ist, wobei Schneidkanten der Sägezähne (51) eine eine Schnittbreite des Sägeschnitts (S) bestimmende maximale Schnittbreite parallel zur Drehachse des Sägewerkzeugs (40) aufweisen, die mindestens 30 % kleiner als der die maximale Breite der Ritze (RI) bestimmende zweite Querabstand (75) des mindestens einen Ritzzahns (71) des Vorritzwerkzeugs (60) ist.

15. System nach Anspruch 14, **dadurch gekennzeichnet, dass** eine jeweilige Schneidkante eine Sägezahns (51) eine Hauptschneidkante (52) aufweist, die zwischen Nebenschneidkanten (53) des Sägezahns (51) angeordnet ist, wobei die Nebenschneidkanten (73) im Bereich der Hauptschneidkante (72) einen ersten Querabstand (54) aufweisen, der kleiner ist als ein zweiter Querabstand (55) der Nebenschneidkanten (53) in einem Abstand zu der Hauptschneidkante (52), wobei der zweite Querabstand (55) für die Schnittbreite des Sägeschnitts (S) bestimmend ist, wobei der zweite Querabstand (55) des Sägezahns (51) kleiner als der zweite Querabstand (75) des mindestens einen Ritzzahns (71) ist.
